Europäisches Patentamt

(19) European Patent Office

Office européen des brevets

(11) Veröffentlichungsnummer: **0 036 576**
**B1**

(12) # EUROPÄISCHE PATENTSCHRIFT

(45) Veröffentlichungstag der Patentschrift:
30.05.84

(51) Int. Cl.³: **G 21 C 9/02**

(21) Anmeldenummer: **81101840.7**

(22) Anmeldetag: **12.03.81**

(54) **Kugelhaufenreaktor mit Zugabevorrichtung für Absorbermaterial und Verfahren zu seinem Betrieb.**

(30) Priorität: **22.03.80  DE 3011218**

(43) Veröffentlichungstag der Anmeldung:
**30.09.81 Patentblatt 81/39**

(45) Bekanntmachung des Hinweises auf die Patenterteilung:
**30.05.84 Patentblatt 84/22**

(84) Benannte Vertragsstaaten:
**DE FR GB**

(56) Entgegenhaltungen:
**DE - A - 1 214 338**
**FR - A - 1 264 283**
**FR - A - 2 394 147**
**GB - A - 882 361**
**GB - A - 1 325 503**

(73) Patentinhaber: **GHT Gesellschaft für Hochtemperaturreaktor-Technik mbH, Friedrich-Ebert-Strasse, D-5060 Bergisch-Gladbach 1 (DE)**

(72) Erfinder: **Reutler, Herbert, Dr., Weissenburger Strasse 33, D-5000 Köln 1 (DE)**
Erfinder: **Müller-Frank, Ulrich, Dr., Otto-Hahn-Strasse 5, D-5060 Bergisch Gladbach 1 (DE)**
Erfinder: **Ullrich, Manfred, Kippekausen 115, D-5060 Bergisch Gladbach 3 (DE)**
Erfinder: **Schepers, Hubert, Gerberlohe 8, D-5060 Bergisch Gladbach 1 (DE)**

(74) Vertreter: **Mehl, Ernst, Dipl.-Ing. et al, Postfach 22 01 76, D-8000 München 22 (DE)**

## Beschreibung

Die vorliegende Erfindung betrifft einen Kugelhaufenkernreaktor nach dem Oberbegriff des ersten Anspruchs. Grössere Reaktoren dieser Art werden im Normalbetrieb mit Absorbestäben geregelt, die mehr oder weniger weit auf die Oberfläche der Kugelschüttung herabgefahren werden; durch ein Einfahren der Absorberstäbe in die Kugelschüttung kann der Reaktor abgeschaltet werden. Zusätzlich wird jedoch eine zweite Abschaltvorrichtung gefordert, die von der ersten der Art nach verschieden sein soll und die auch unabhängig davon betätigt wird. Hierfür ist bereits früher vorgeschlagen worden, Absorbermaterial enthaltende Kugeln von gegenüber den Brennelementkugeln geringerer Grösse in einem Behälter oberhalb des Reaktors zu lagern und bei Bedarf auf die Oberfläche der Kugelschüttung herabfallen zu lassen. Die Absorberkugeln rieseln dann durch die Zwischenräume zwischen den Brennelementkugeln und verteilen sich so in der Schüttung, dass der Reaktor ebenfalls abgeschaltet wird. Die Absorberkugeln können nach einem weiteren Vorschlag bei Reaktoren kleineren Durchmessers auch in neben der Kugelschüttung im Reflektor angelegte Kanäle geleitet werden. Für die Ausgestaltung der Vorratsbehälter und der Mechanismen zu ihrer schnellen und sicheren Entleerung bieten sich zunächst Lösungen an, wie sie auf anderen Gebieten der Technik zum Lagern und Abfüllen körniger Stoffe gefunden wurden. Bei der bekannten Verwendung von Schiebern, Ventilen und dergleichen zum Absperren der Ausflussöffnung eines solchen Vorratsbehälters lässt sich jedoch nicht ausschliessen, dass beim Schliessen desselben einzelne Absorberkugeln durch die Bewegung der Verschlussorgane zerstört werden. Derartige Bruchstücke werden dann womöglich nicht von dem etwa siebartig ausgestalteten Reaktorboden aufgefangen, von wo sie mit den anderen Absorber- und Brennelementkugeln über besondere Abflussöffnungen entfernt werden können; sie könnten vielmehr in den Gaskreislauf gelangen und bei den in Aussicht genommenen hohen Gasgeschwindigkeiten zu Schäden an anderen Teilen der Anlage, z.B. den Wärmetauschern führen. Auf das Absperren des Ausflusses von Absorberkugeln aus dem Vorratsbehälter lässt sich jedoch nicht verzichten, wenn das weiter unten näher beschriebene Betriebsverfahren für einen derartigen Reaktor durchgeführt werden soll, durch das die Forderung nach regelmässig wiederkehrenden Funktionsprüfungen der Zweitabschaltvorrichtung erfüllt werden kann.

Aufgabe der vorliegenden Erfindung ist ein Kugelhaufenkernreaktor mit einem Vorratsbehälter für rieselfähige Körper aus einem neutronenabsorbierenden Material, dessen Ausflussöffnung beliebig geöffnet und geschlossen werden kann, ohne dass dabei derartige Körper zerstört würden, sowie ein Verfahren zum Betrieb des Kernreaktors und dieser Vorrichtung, das Wiederholungsprüfungen ermöglicht.

Die Lösung der Aufgabe erfolgt durch die im kennzeichnenden Teil des ersten Anspruchs angegebenen Mittel. Es wird ein Stauverschluss geschaffen, der durch Anheben des Lagerbehälters und des Kolbens geöffnet wird, indem der sich dann auf dem Kolben bildende Schüttkegel nicht bis an die Ausflussöffnung heranreicht und die neu aus dieser austretenden Körper am Kegel abgleiten und ausserhalb des Zylinders herabfallen. Durch Absenken des Vorratsbehälters und damit auch des Kolbens im Zylinder kann sich demgegenüber ein Schüttkegel ausbilden, der bis an die Ausflussöffnung heranreicht und den weiteren Austritt Absorberkugeln verhindert.

Die im zweiten Anspruch vorgeschlagene Einrichtung zur Füllstandsmessung gewinnt ihre Bedeutung im Zusammenhang der weiter unten beschriebenen Wiederholungsprüfung.

Die im dritten Anspruch vorgeschlagene Ausgestaltung der Erfindung stellt sicher, dass auch bei Auftreten von Vibrationen oder bei Erdbeben der Verschluss des Vorratsbehälters nicht aufgehoben wird.

Durch das im vierten Anspruch vorgeschlagene Verfahren zum Betrieb eines Kernreaktors der beschriebenen Art kann bei Bedarf, z.B. bei den in regelmässigen Abständen vorzunehmenden Wiederholungsprüfungen die Funktionsfähigkeit der Zweitabschaltvorrichtung nachgewiesen werden, ohne dass dazu der Reaktor ausser Betrieb gesetzt werden oder gar der Reaktorbehälter geöffnet werden müsste. Durch das kurzzeitige Inbetriebsetzen der Vorrichtung werden die Beweglichkeit des Vorratsbehälters und die Rieselfähigkeit seines Inhaltes nachgewiesen. Die Menge des während der einige Sekunden dauernden Öffnung des Vorratsbehälters ausgeflossenen Absorbermaterials kann einmal durch Messung der Differenz der Füllstände erfolgen und andererseits durch die Messung der Beeinflussung der Reaktivität des Reaktors. Diese Beeinflussung braucht nur gering zu sein und bildet sich durch das «Abtrennen» des Absorbermaterials bei fortgesetztem Reaktorbetrieb in kurzer Zeit von selbst zurück. Die dann verbrauchten Absorberkugeln werden zusammen mit den ebenfalls verbrauchten Brennelementkugeln nach einiger Zeit aus dem Reaktor entfernt.

Ein Ausführungsbeispiel der Erfindung ist in der Zeichnung dargestellt, und zwar zeigt

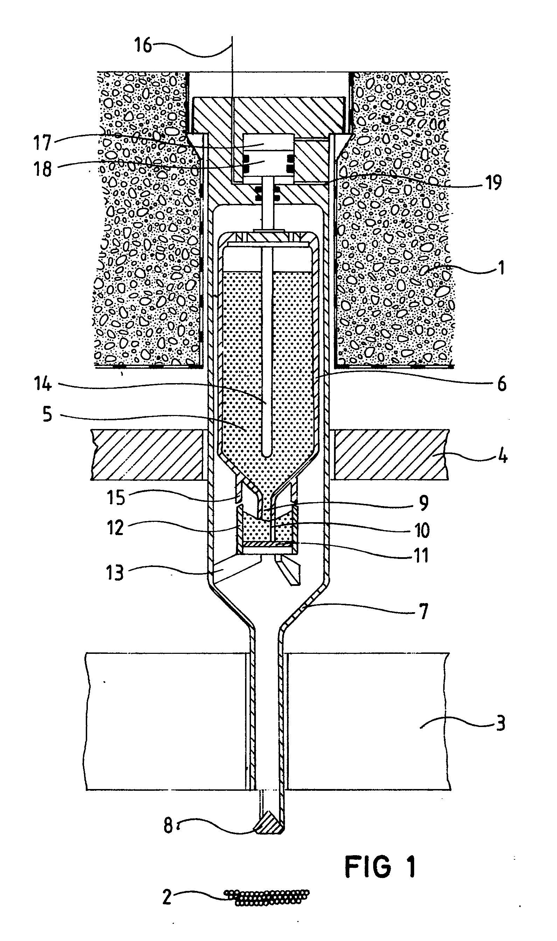

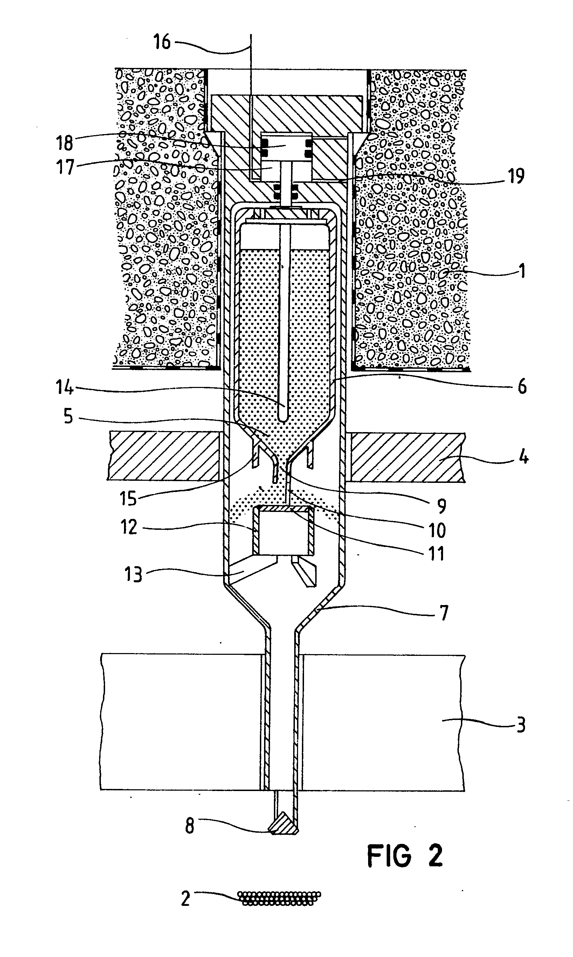

Fig. 1 einen Ausschnitt aus einem Kugelhaufenkernreaktor mit einer erfindungsgemässen Eingabevorrichtung für Absorbermaterial in geschlossenem Zustand und Fig. 2 dieselbe in geöffnetem Zustand.

In einem Reaktorbehälter 1, z.B. aus Spannbeton ist eine die Reaktionszone bildende Kugelschüttung 2 aus mehreren Millionen Brennelementen von je etwa 6 cm Durchmesser enthalten, die von oben nach unten von einem Kühlgas, z.B. Helium durchströmt wird. Zur Verbesserung der Neutronenökonomie sind ein Reflektor 3 und zum Schutz des Behälters vor Wärmestrahlung ein Wärmeschild 4 vorhanden. Zum Abschalten eines Reaktors von 1 640 MW ist eine Menge von etwa 1,8 cm³ Absorberkugeln 5 aus Borkarbid in Graphitmatrix von etwa 10 mm Durchmesser erforderlich. Diese Menge würde z.B. in sechs gleichmässig über den Querschnitt des Reaktors verteilten Vorratsbehältern 6 gelagert, von denen hier einer dargestellt ist. Dieser ist axialbeweglich in einem Führungsrohr 7 angeordnet, das an seinem unteren Ende mit einem Streukegel 8 versehen ist, der für eine möglichst gleichmässige Verteilung der Absorberkugeln 5 über die Oberfläche der Kugelschüttung sorgt. Der Vorratsbehälter 6 weist an seinem unteren Ende eine Ausflussöffnung 9 auf. Mit dem Behälter 6 über einen Steg 10 fest verbunden ist ein Kolben 11.

Dieser gleitet in einem Zylinder 12, der über mehrere radiale Stützen 13 am Führungsrohr 7 befestigt ist. Zur Messung des Füllstandes der Absorberkugeln 5 im Vorratsbehälter 6 ist eine entsprechende Vorrichtung 14 vorhanden; da Graphit elektrisch leitend ist, erscheint die Verwendung eines nach dem Induktionsprinzip arbeitenden Füllstandsmessers zweckmässig, wie er von der Anmelderin bereits früher zur Verwendung in Flüssigmetallen vorgeschlagen wurde. In der Fig. 1 ist der Zustand dargestellt, in dem sich der Vorratsbehälter 6 in seiner unteren Endlage befindet. Der Kolben 11 befindet sich am unteren Ende des Zylinders 12 und dieser hat sich so weit mit Absorberkugeln gefüllt, bis die Ausflussöffnung 9 verstopft wurde; der Vorratsbehälter 6 ist jetzt geschlossen. Ein an diesem angebrachter Ring 15, koaxial zum Zylinder 12 und von gleichem Durchmesser verhindert bei Auftreten von Erschütterungen, dass Absorberkugeln aus dem Zylinder 12 herausgeschleudert werden und so der Verschluss des Behälters 6 aufgehoben wird. Der Ring 15 braucht nicht dicht am Zylinder 12 anzuliegen, doch sollte die Grösse des verbleibenden Spalts geringer als der Durchmesser einer Absorberkugel sein. Über eine Leitung 16 kann, zweckmässigerweise mit dem ohnehin im Reaktor zirkulierenden Helium, ein Pneumatikzylinder 17 mit Druck beaufschlagt werden derart, dass sich ein weiterer Kolben 18 nach oben bewegt und dabei den Vorratsbehälter 6 anhebt; es wird dann der in der Fig. 2 dargestellte Zustand erreicht. Durch Anheben des Vorratsbehälters 6 und damit des Kolbens 11 bis an den oberen Rand des Zylinders 12 kann sich auf ersteren nur noch ein Schüttkegel ausbilden, der nicht mehr an die Ausflussöffnung 9 heranreicht. Die Absoberkugeln 5 fallen dann aus dem Vorratsbehälter 6 durch das Führungsrohr 7 auf die Kugelschüttung 2, und zwar bis zur völligen Entleerung des Vorratsbehälters, wenn eine Abschaltung des Reaktors beabsichtigt ist. Geht es dagegen nur um den Nachweis der Funktionsfähigkeit der Vorrichtung bei einer Wiederholungsprüfung, wird nach einigen Sekunden der Druck aus dem Pneumatikzylinder 17 über eine weitere Leitung 19 abgelassen und der Vorratsbehälter bewegt sich durch sein Eigengewicht wieder nach unten, das weitere Ausfliessen von Absorberkugeln 5 wird dann unterbrochen.

Durch bekannte, hier nicht dargestellte Instrumente lässt sich die Reaktivität in der Kugelschüttung messen. Durch ein Absinken derselben nach einer kurzzeitigen Betätigung der Abschaltvorrichtung lässt sich unabhängig von der Füllstandsmessung in der Vorrichtung 14 nachweisen, dass eine bestimmte Anzahl von Absorberkugeln 5 aus dem Vorratsbehälter 6 ausgeflossenen und damit dass die Abschaltvorrichtung funktionsfähig ist.

**Patentansprüche**

1. Kugelhaufenkernreaktor, der durch das Einbringen von rieselfähigen Körpern (5) abschaltbar ist, die neutronenabsorbierendes Material enthalten, wobei die rieselfähigen Körper sich während des Normalbetriebes in einem oberhalb der Kugelschüttung angeordneten Vorratsbehälter (6) befinden, der an seiner tiefsten Stelle mit einer absperrbaren Ausflussöffnung (9) versehen ist, dadurch gekennzeichnet, dass

a) der Vorratsbehälter (6) in senkrechter Richtung beweglich ist;

b) unterhalb der Ausflussöffnung (9) ein mit dem Vorratsbehälter (6) fest verbundener Kolben (11) angeordnet ist, der in einem in bezug auf den Reaktor (1) ortsfesten, oben offenen Zylinder (12) gleitet;

c) der Kolben (11) in der oberen Endlage des Vorratsbehälters (6) mit dem oberen Rand des Zylinders (12) abschliesst;

d) in der unteren Endlage des Vorratsbehälters (6) die Höhe des sich auf dem Kolben (11) bildenden Schüttkegels grösser als der Abstand zwischen Kolben und Ausflussöffnung (9) ist.

2. Kernreaktor nach Anspruch 1, dadurch gekennzeichnet, dass der Vorratsbehälter (6) mit einer Einrichtung (14) zum Messen des Füllstandes versehen ist.

3. Kernreaktor nach Anspruch 1 oder 2, dadurch gekennzeichnet, dass

a) am unteren Ende des Vorratsbehälters (6) koaxial zum Zylinder (12) und von annähernd gleichem Durchmesser wie dieser ein Ring (15) befestigt ist;

b) in der unteren Endlage des Vorratsbehälters (6) der Abstand zwischen Ring (15) und Zylinder (12) geringer als der Durchmesser der rieselfähigen Körper (5) ist.

4. Verfahren zum Betrieb eines Kernreaktors nach Anspruch 1, 2 oder 3, dadurch gekennzeichnet, dass

a) der Vorratsbehälter (6) zur Prüfung aus der unteren in die obere Endlage gebracht wird;

b) die Reaktivität des Reaktors daraufhin überwacht wird, ob sich eine Absenkung einstellt, die der Menge des neutronenabsorbierenden Materials (5) entspricht, deren Ausfliessen aus dem Vorratsbehälter während des Prüfungszeitraumes zu erwarten ist.

**Claims**

1. A pebble-bed nuclear reactor which can be switched off by the introduction of pourable bodies (5) which contain neutron-absorbing material, in which, during normal operation, the pourable bodies are disposed in a storage container (6) which is arranged above the pebble charge and which is provided at its lowest point with a closable discharge opening (9), characterised in that

a) the storage container (6) is movable in the vertical direction;

b) below the discharge (9), there is arranged a piston (11) which is fixed to the storage container (6) and slides in a cylinder (12) which is open at the top and is stationary with respect to the reactor (1);

c) in the upper end position of the storage container (6), the piston (11) terminates with the upper edge of the cylinder (12);

d) in the lower end position of the storage container (6), the height of the discharge cone forming on the piston (11) is greater than the distance between the piston and the discharge opening (9).

2. A nuclear reactor according to claim 1, characterised in that the storage container (6) is provided with an arrangement (14) for measuring the filling level.

3. A nuclear reactor according to claim 1 or claim 2, characterised in that

a) a ring (15) is fixed at the lower end of the storage container (6) coaxially with the cylinder (12) and having approximately the same diameter as the cylinder;

b) in the lower end position of the storage container (6), the distance between the ring (15) and the cylinder (12) is less than the diameter of the pourable bodies (5).

4. A process for operating a nuclear reactor according to claim 1, 2 or 3, characterised in that

a) the storage container (6) is brought from the lower into the upper end position for testing;

b) the reactivity of the reactor is monitored as to wheter a lowering has been set which corresponds to the quantity of the neutron-absorbing material (5) which is expected to be discharged from the storage container during the test period.

## Revendications

1. Réacteur nucléaire à lit de boulets, qui peut être arrêté par l'introduction de corps (5) aptes à ruisseler et contenant une matière absorbant les neutrons, les corps aptes à ruisseler se trouvant pendant la marche normale dans un réservoir de réserve (6) disposé au-dessus du lit de boulets et muni, à son endroit le plus bas, d'une ouverture d'écoulement (9) pouvant être obturée, caractérisé en ce que:

a) le réservoir (6) est mobile suivant la direction verticale,

b) en-dessous de l'ouverture d'écoulement (9) est disposé un piston (11) relié rigidement au réservoir de réserve (6) et coulissant dans un cylindre (12) ouvert vers le haut, et fixe par rapport au réacteur (1),

c) dans la position extrême-supérieure du réservoir de réserve (6), le piston (11) se situe à la hauteur du bord supérieur du cylindre (12),

d) dans la position extrême inférieure du réservoir de réserve (6), la hauteur du cône de déjection se formant sur le piston (11) est supérieure à la distance entre le piston et l'ouverture d'écoulement (9).

2. Réacteur nucléaire suivant la revendication 1, caractérisé en ce que le réservoir de réserve (6) est muni d'un dispositif (14) de mesure du niveau de remplissage.

3. Réacteur nucléaire suivant la revendication 1 ou 2, caractérisé en ce que

a) à l'extrémité inférieure du réservoir (6) un anneau (15) est fixé coaxialement au cylindre (12) et a à peu près le même diamètre que celui-ci,

b) dans la position extrême inférieure du réservoir de réserve (6) la distance entre l'anneau (15) et le cylindre (12) est inférieure au diamètre des corps aptes à s'écouler (5).

4. Procédé pour l'exploitation d'un réacteur nucléaire suivant la revendication 1, 2 ou 3, caractérisé en ce qu'il consiste à:

a) amener le réservoir de réserve (6) pour la vérification, de la position extrême inférieure à la position extrême supérieure,

b) surveiller ensuite la réactivité du réacteur pour savoir s'il s'établi une diminution qui correspond à la quantité du matériau (5) absorbant des neutrons, dont on escompte la sortie hors du réservoir de réserve, pendant la durée de la vérification.

0 036 576

FIG 1

5

**FIG 2**